# EUROPÄISCHE PATENTSCHRIFT

(11) **EP 1 068 949 B1**
(45) Veröffentlichungstag und Bekanntmachung des Hinweises auf die Patenterteilung: **26.10.2005**
(21) Anmeldenummer: 00113961.7
(22) Anmeldetag: 01.07.2000
(51) Int. Cl.: B32B 27/36, B32B 27/32, C08J 5/18

(54) **Weisse, biaxial orientierte Polyesterfolie mit Cycloolefincopolymer (COC), Verfahren zu ihrer Herstellung und ihre Verwendung**
White, biaxially orientated polyester film comprising a cycloolefin copolymer, a method for its manufacture, and its use
Films blanc de polyester à orientation biaxiale comprenant une polyoléfine cyclique, leur fabrication et leur utilisation

(30) Priorität: 14.07.1999 DE 19932384
(43) Veröffentlichungstag der Anmeldung: 17.01.2001
(73) Patentinhaber: Mitsubishi Polyester Film GmbH, 65203 Wiesbaden (DE)
(72) Erfinder: Peiffer, Herbert, 55126 Mainz (DE); Hilkert, Gottfried, 55291 Saulheim (DE)
(74) Vertreter: Schweitzer, Klaus

(56) Entgegenhaltungen:
- EP-A- 0 522 758
- EP-A- 0 786 495
- EP-A- 0 800 914
- DATABASE CHEMABS [Online] CHEMICAL ABSTRACTS SERVICE, COLUMBUS, OHIO, US; KISHIDA, MINORU ET AL: "Lightweight polyester films and their manufacture" retrieved from STN Database accession no. 119:182564 XP002150969 -& JP 05 140349 A (UNITIKA LTD, JAPAN) 8. Juni 1993 (1993-06-08)
- DATABASE CHEMABS [Online] CHEMICAL ABSTRACTS SERVICE, COLUMBUS, OHIO, US; YASUE, KENJI ET AL: "Lightweight polyester films for paper substitutes and their manufacture" retrieved from STN Database accession no. 119:74254 XP002150970 -& JP 05 009319 A (UNITIKA LTD, JAPAN) 19. Januar 1993 (1993-01-19)
- DATABASE CHEMABS [Online] CHEMICAL ABSTRACTS SERVICE, COLUMBUS, OHIO, US; KISHIDA, MINORU ET AL: "Lightweight polyester films and their manufacture" retrieved from STN Database accession no. 120:56400 XP002150971 -& JP 05 230253 A (UNITIKA LTD, JAPAN) 7. September 1993 (1993-09-07)
- DATABASE CHEMABS [Online] CHEMICAL ABSTRACTS SERVICE, COLUMBUS, OHIO, US; SASAKI, YASUSHI ET AL: "Microporous polyester films as paper substitutes" retrieved from STN Database accession no. 128:218177 XP002150972 -& JP 10 060143 A (TOYOBO CO., LTD., JAPAN) 3. März 1998 (1998-03-03)

## Beschreibung

Die vorliegende Erfindung betrifft eine weiße, biaxial orientierte Polyesterfolie, die mindestens eine Schicht umfaßt, welche einen Polyesterrohstoff und ein Cycloolefincopolymer (COC) auf Basis eines Norbornen/Ethylen-Copolymeren enthält. Die Erfindung betrifft femer ein Verfahren zur Herstellung der Polyesterfolie sowie ihre Verwendung.

Weiße, biaxial orientierte Polyesterfolien sind nach dem Stand der Technik bekannt. Diese nach dem Stand der Technik bekannten Folien zeichnen sich entweder durch eine gute Herstellbarkeit, oder eine gute Optik oder durch ein akzeptables Verarbeitungsverhalten aus.

In der DE-A 2 353 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass das bei der Herstellung der Folie anfallende Regenerat (im Wesentlichen ein Gemisch aus Polyesterrohstoff und Ethylen- oder Propylen-Mischpolymer) nicht mehr eingesetzt werden kann, da ansonsten die Folie gelb wird. Das Verfahren ist damit aber unwirtschaftlich und die mit Regenerat produzierte Folie konnte sich am Markt nicht durchsetzen. Außerdem weist die Folie deutlich zu hohe Rauhigkeiten auf und hat damit ein sehr mattes Aussehen (sehr niedriger Glanz), was für viele Anwendungszwecke unerwünscht ist.

In der EP-A 0 300 060 wird eine einschichtige Polyesterfolie beschrieben, die außer Polyethylenterephthalat noch 3 bis 40 Gew.-% eines kristallinen Propylenpolymeren und 0,001 bis 3 Gew.-% einer oberflächenaktiven Substanz enthält. Die oberflächenaktive Substanz bewirkt, dass die Anzahl der Vakuolen in der Folie ansteigt und gleichzeitig ihre Größe in gewünschtem Maße abnimmt. Hierdurch wird eine höhere Opazität und eine niedrigere Dichte der Folie erzielt. Nachteilig an der Folie bleibt weiterhin, dass das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb wird. Das Verfahren ist damit aber unwirtschaftlich und die mit Regenerat produzierte Folie konnte sich am Markt nicht durchsetzen. Außerdem weist die Folie deutlich zu hohe Rauhigkeiten auf und hat damit ein sehr mattes Aussehen (sehr niedriger Glanz), was für viele Anwendungszwecke unerwünscht ist.

In der EP-A 0 360 201 wird eine zumindest zweischichtige Polyesterfolie beschrieben, die eine Basisschicht mit feinen Vakuolen enthält, deren Dichte zwischen 0,4 und 1,3 kg/dm³ liegt und mindestens eine Deckschicht aufweist, deren Dichte größer als 1,3 kg/dm³ ist. Die Vakuolen werden durch Zugabe von 4 bis 30 Gew.-% eines kristallinen Propylenpolymeren und anschließender biaxialer Streckung der Folie erzielt. Durch die zusätzliche Deckschicht wird die Herstellbarkeit der Folie besser (keine Streifenbildung auf der Oberfläche der Folie), die Oberflächenspannung wird erhöht und die Rauhigkeit der laminierten Oberfläche kann verringert werden. Nachteilig bleibt weiterhin, dass das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb wird. Das Verfahren ist damit aber unwirtschaftlich und die mit Regenerat produzierte Folie konnte sich am Markt nicht durchsetzen. Außerdem weisen die in den Beispielen aufgeführten Folien noch immer zu hohe Rauhigkeiten auf und haben damit ein mattes Aussehen (niedriger Glanz), was für viele Anwendungszwecke unerwünscht ist.

In der EP-A 0 795 399 wird eine zumindest zweischichtige Polyesterfolie beschrieben, die eine Basisschicht mit feinen Vakuolen enthält, deren Dichte zwischen 0,4 und 1,3 kg/dm³ liegt und mindestens eine Deckschicht aufweist, deren Dichte größer als 1,3 kg/dm³ beträgt. Die Vakuolen werden durch Zugabe von 5 bis 45 Gew.-% eines thermoplastischen Polymers zum Polyesterrohstoff in der Basis und anschließender biaxialer Streckung der Folie erzielt. Als thermoplastische Polymere werden u.a. Polypropylen, Polyethylen, Polymethyl-Penten, Polystyrol oder Polycarbonat genannt, wobei Polypropylen das bevorzugte thermoplastische Polymer ist. Durch die zusätzliche Deckschicht wird die Herstellbarkeit der Folie besser (keine Streifenbildung auf der Oberfläche der Folie), die Oberflächenspannung wird erhöht und die Rauhigkeit der laminierten Oberfläche kann den jeweiligen Erfordernissen angepasst werden. Eine weitere Modifizierung der Folie in der Basisschicht und/oder in den Deckschichten mit Weiß-Pigmenten (in der Regel TiO₂) und/oder mit optischen Aufhellern ermöglicht die Anpassung der Folieneigenschaften an die jeweiligen Anwendungserfordernisse. Nachteilig bleibt weiterhin, dass das bei der Herstellung der Folie anfallende Regenerat (im Wesentlichen ein Gemisch aus Polyesterrohstoff und dem additiven Rohstoff) nicht mehr eingesetzt werden kann, da ansonsten die Folie undefiniert in der Farbe verändert wird, was unerwünscht ist. Das Verfahren ist damit aber unwirtschaftlich und die mit Regenerat produzierte Folie konnte sich am Markt nicht durchsetzen. Außerdem weisen die in den Beispielen aufgeführten Folien noch immer zu hohe Rauhigkeiten auf und haben damit ein mattes Aussehen (niedriger Glanz), was für viele Anwendungszwecke unerwünscht ist.

In der DE-A 195 40 277 wird eine ein- oder mehrschichtige Polyesterfolie beschrieben, die eine Basisschicht mit feinen Vakuolen enthält, deren Dichte zwischen 0,6 und 1,3 kg/dm³ liegt und eine Doppelbrechung in der Ebene aufweist, die von -0,02 bis 0,04 reicht. Die Vakuolen werden durch Zugabe von 3 bis 40 Gew.-% eines thermoplastischen Harzes zum Polyesterrohstoff in der Basis und anschließender biaxialer Streckung der Folie erzielt. Als thermoplastische Harze werden u.a. Polypropylen, Polyethylen, Polymethyl-Penten, cyclische Olefin-Polymere, Polyacrylharze, Polystyrol oder Polycarbonat genannt, wobei Polypropylen und Polystyrol bevorzugte Rohstoffe sind. Durch Einhalt der angegebenen Grenzen für die Doppelbrechung der Folie zeichnet sich die beanspruchte Folie insbesondere durch eine überlegene Reißfestigkeit und überlegene Isotropieeigenschaften aus. Nachteilig bleibt weiterhin, dass das bei der Herstellung der Folie anfallende Regenerat nicht mehr eingesetzt werden kann, da ansonsten die Folie undefiniert in der Farbe verändert wird, was unerwünscht ist Das Verfahren ist damit aber unwirtschaftlich und die mit Regenerat produzierte Folie konnte sich am Markt nicht durchsetzen. Außerdem weisen die in den Beispielen aufgeführten Folien noch immer zu hohe Rauhigkeiten auf und haben damit ein mattes Aussehen (niedriger Glanz), was für viele Anwendungszwecke unerwünscht ist.

Die JP-A-05 140349 offenbart matte Folien, welche unter Verwendung von COCs hergestellt werden.

Die JP-A-05 009319 offenbart ebenfalls matte Folien, welche Cycloolefincopolymere (COCs) enthalten, die Tgs von < 110°C aufweisen. Folien, die solche COCs enthalten, lassen sich auch nicht ohne Qualitätseinbußen (Gelbfärbung) mit Eigenregenerat herstellen.

Die JP-A-10 060143 offenbart Folien, in die inkompatible Harze wie Polypropylen und Polystyrol zwecks Vakuoleninitiierung eingearbeitet wurden. Solche Folien sind zwar opak, weisen jedoch den Nachteil der Gelbfärbung bei Verwendung von Eigenregenerat auf.

Die Aufgabe der vorliegenden Erfindung bestand darin, eine weiße, biaxial orientierte Polyesterfolie bereitzustellen, die sich durch einen hohen Glanz, insbesondere durch eine verbesserte Herstellbarkeit, d. h. geringe Herstellkosten, auszeichnet. Insbesondere soll gewährleistet sein, dass das bei dem Herstellprozeß immanent anfallene Regenerat in einer Konzentration von 10 bis 70 Gew.-%, bezogen auf das Gesamtgewicht der Folie, wieder verwendet werden kann, ohne dass dabei die physikalischen Eigenschaften der Folie nennenswert negativ beeinflußt werden. Insbesondere soll durch die Regeneratzugabe keine nennenswerte Gelbfärbung der Folie auftreten.

Die Aufgabe wird gelöst durch eine weiße, biaxial orientierte Polyesterfolie mit mindestens einer Basisschicht, deren kennzeichnende Merkmale darin bestehen, dass zumindestens diese Basisschicht als alleiniges Opalescierungsmittel ein Cycloolefincopolymeres (COC) auf Basis eines Norbonen/Ethylen-Copolymeren in einer Konzentration von 6 bis 60 Gew.-%, bezogen auf die Basischicht enthält, wobei die Glasübergangstemperatur des Cycloolefincopolymeren (COC) im Bereich von 110 bis 270 °C liegt und die Folie eine Opazität von > 55 % (DIN 53146), einen Glanz von > 90 (DIN 67 530, Einstrahlwinkel 60°) und ein Querstreckverhältnis von 3,5 : 1 bis 4,5 : 1 aufweist.

Unter einer weißen, biaxial orientierten Polyesterfolie im Sinne der vorliegenden Erfindung wird eine solche Folie bezeichnet, die einen Weißgrad von mehr als 70 %, bevorzugt von mehr als 75 % und besonders bevorzugt von mehr als 80 %, aufweist. Desweiteren beträgt die Opazität der erfindungsgemäßen Folie mehr als 55 %, bevorzugt mehr als 60 % und besonders bevorzugt mehr als 65 %.

Zur Erzielung des gewünschten Weißgrades der erfindungsgemäßen Folie muss der Anteil an dem Cycloolefincopolymeren (COC) in der Basisschicht größer als 2 % sein, andernfalls ist der Weißgrad kleiner als 70 %. Ist der Cycloolefincopolymer (COC)-Gehalt andererseits größer als 60 %, so läßt sich die Folie nicht mehr wirtschaftlich herstellen, da sie sich nicht mehr verfahrenssicher verstrecken lässt.

Weiterhin ist es notwendig, dass die Glasübergangstemperatur des eingesetzten Cycloolefincopolymeren (COC) größer als 110 °C ist. Andernfalls (bei einer Glasübergangstemperatur von kleiner als 110 °C) ist das Rohstoffgemisch schlecht verarbeitbar (schlecht extrudierbar), der gewünschte Weißgrad wird nicht mehr erreicht und das eingesetzte Regenerat führt zu einer Folie, die zu einer erhöhten Gelbfärbung neigt. Ist andererseits die Glasübergangstemperatur des ausgewählten Cycloolefincopolymeren (COC) größer als 270 °C, so wird sich die Rohstoffmischung im Extruder nicht mehr ausreichend homogen dispergieren lassen. Dies hat dann eine Folie mit inhomogenen Eigenschaften zur Folge.

In der bevorzugten Ausführungsform der erfindungsgemäßen Folie liegt die Glasübergangstemperatur der verwendeten COC's in einem Bereich von 110 bis 220 °C.

Überraschender Weise wurde gefunden, dass durch den Zusatz eines Cycloolefincopolymeren (COC) in der vorstehend beschriebenen Weise eine weiße, opake, glänzende Folie hergestellt werden kann.

Entsprechend der Menge und der Art des zugegebenen Cycloolefincopolymeren (COC) kann der Weißgrad und die Opazität der Folie exakt eingestellt und den jeweiligen Anforderungen angepasst werden. Durch diese Maßnahme ist es möglich, auf andere gängige weiß- und opakmachende Additive weitgehend zu verzichten. Weiterhin war es sehr überraschend, dass die Oberflächenrauhigkeit der Folie wesentlich geringer und damit der Glanz der Folie wesentlich höher ist, als bei vergleichbaren Folien nach dem Stand der Technik. Vollkommen überraschend war der zusätzliche Effekt, dass das Regenerat nicht zur Gelbverfärbung neigt, wie die polymeren Additive nach dem Stand der Technik.

Alle diese beschriebenen Merkmale waren nicht vorhersehbar. Dies umso mehr, da COC's zwar offensichtlich zu Polyethylenterephthalat weitgehend inkompatibel sind, bekanntlich aber mit ähnlichen Streckverhältnissen und Strecktemperaturen orientiert werden, wie Polyethyler terephthalat. Unter diesen Voraussetzungen hätte der Fachmann erwartet, dass bei diesen Herstellbedingungen keine weiße, opake Folie mit hohem Glanz produziert werden kann.

In den bevorzugten und den besonders bevorzugten Ausführungsformen zeichnet sich die erfindungsgemäße Folie durch einen hohen/bzw. durch einen besonders hohen Weißgrad und eine hohe/bzw. durch eine besonders hohe Opazität aus, wobei die Farbänderung der Folie durch die Regeneratzugabe äußerst gering bleibt.

Die erfindungsgemäße Folie ist einschichtig oder mehrschichtig. Einschichtige Ausführungsformen sind wie die nachstehend beschriebene COC-haltige Schicht aufgebaut. Mehrschichtige Ausführungsformen sind mindestens zweischichtig und umfassen immer die COC-haltige Schicht und zumindest eine weitere Schicht, wobei die COC-haltige Schicht die Basisschicht ist, aber zusätzlich auch die Zwischen- oder die Deckschicht der mehrschichtigen Folie bilden kann. In einer bevorzugten Ausführungsform bildet die COC-haltige Schicht die Basisschicht der Folie mit mindestens einer, vorzugsweise mit beidseitigen Deckschicht/en, wobei gegebenenfalls einseitig eine oder beidseitig Zwischenschicht/en vorhanden sein kann/können. In einer weiteren bevorzugten Ausführungsform bildet die COC-haltige Schicht auch eine Zwischenschicht der Mehrschichtfolie. Weitere Ausführungsformen mit COC-haltigen Zwischenschichten sind fünfschichtig aufgebaut und haben neben der COC-haltigen Basischicht beidseitig COC-haltige Zwischenschichten. In einer weiteren Ausführungsform kann die COC-haltige Schicht zusätzlich zur Basisschicht, ein- oder beidseitig Deckschicht/en auf der Basis- oder Zwischenschicht bilden. Die Basisschicht ist im Sinne der vorliegenden Erfindung diejenige Schicht, welche mehr als 50 % bis 100 %, vorzugsweise 70 bis 90 %, der Gesamtfoliendicke ausmacht. Die Deckschichten sind die Schichten, welche die äußeren Schichten der Folie bilden.

Die jeweilige Ausführungsform der Erfindung ist eine nicht transparente, opake Folie. Unter nicht transparenten Folien werden im Sinne der vorliegenden Erfindung solche Folien verstanden, deren Lichtdurchlässigkeit nach ASTM-D 1003-77 unter 95 %, vorzugsweise unter 75 %, liegt.

Die COC-haltige Schicht (die Basisschicht) der erfindungsgemäßen Folie enthält einen Polyesterrohstoff, vorzugsweise ein Polyesterhomopolymeres, ein COC sowie gegebenenfalls weitere zugesetzte Additive in jeweils wirksamen Mengen. Im allgemeinen enthält diese Schicht mindestens 20 Gew.-%, vorzugsweise 40 bis 98 Gew. -%, insbesondere 70 bis 98 Gew. %, Polyesterrohstoff, bezogen auf das Gewicht der Schicht.

Die Basisschicht der Folie enthält einen thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure [= Poly(1,4-cyclo-hexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (A=Deckschicht 1) oder der Schicht C (C=Deckschicht 2) einer mehrschichtigen Folie ABC (B=Basisschicht) vorkommen können.

Geeignete andere aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Andere aromatische Dicarbonsäuren sind bevorzugt Benzoldicarbonsäuren, Naphtalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉)-Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die COC-haltige Schicht bzw. die Folie bei einschichtigen Ausführungsformen ein Cycloolefincopolymeres (COC) auf Basis eines Norborner/Ethylen-Copolymeren in einer Menge von minimal 6 bis 60 Gew.-% und besonders bevorzugt 6 bis 40 Gew-%, bezogen auf das Gewicht der Schicht bzw. bezogen auf das Gewicht der Folie bei einschichtigen Ausführungsformen. Es ist wesentlich für die vorliegende Erfindung, dass das Cycloolefincopolymere (COC) mit dem Polyethylenterephthalat nicht verträglich ist und mit diesem keine homogene Mischung bildet.

Cycloolefinpolymere sind Homopolymerisate oder Copolymerisate, welche polymerisierte Cycloolefineinheiten und gegebenenfalls acyclische Olefine als Comonomer enthalten. Typische Cycloolefinpolymere enthalten 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefineinheiten. Das sind insbesondere Polymere, die aus den Monomeren der cyclischen Olefinen der Formeln I, II, III, IV, V oder VI aufgebaut sind:

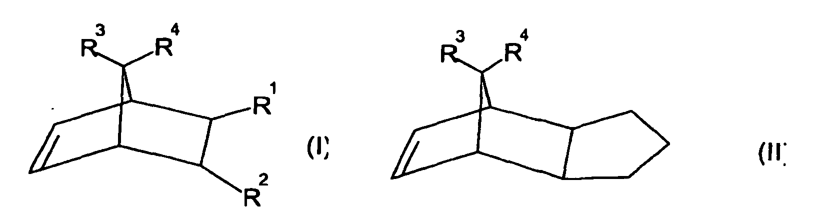

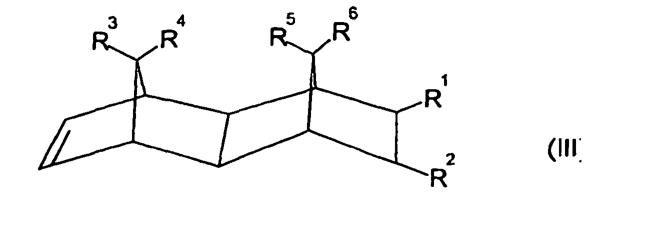

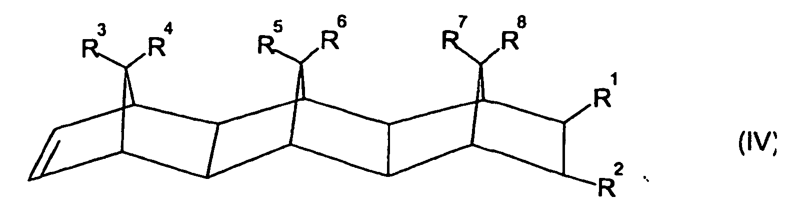

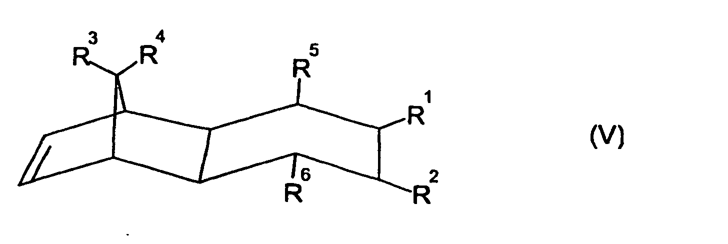

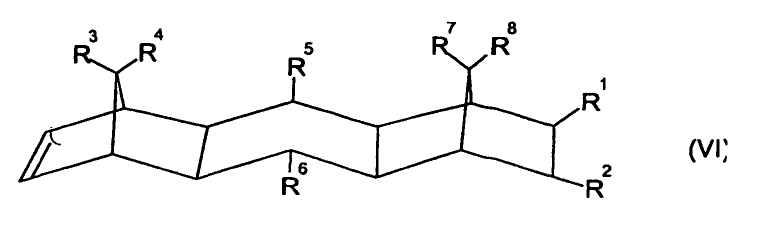

In diesen Formeln sind R¹, R², R³, R⁴, R⁵, R⁶, R⁷ und R⁸ gleich oder verschieden und bedeuten ein Wasserstoffatom oder einen C₁-C₃₀-Kohlenwasserstoffrest; oder zwei oder mehrere der Reste R¹ bis R⁸ sind cyclisch verbunden, wobei gleiche Reste in den verschiedenen Formeln gleiche oder unterschiedliche Bedeutung haben. C₁-C₃₀-Kohlenwasserstoffreste sind beispielsweise lineare oder verzweigte C₁-C₈-Alkylreste, C₆-C₁₈-Arylreste, C₇-C₂₀-Alkylenarylreste oder cyclische C₃-C₂₀-Alkylreste oder acyclische C₂-C₂₀-Alkenylreste.

Gegebenenfalls können Cycloolefinpolymere durch 0 bis 45 Gew.-%, bezogen auf die Gesamtmasse des Cycloolefinpolymeres, polymerisierte Einheiten mindestens eines monocyclischen Olefins der Formel VII enthalten:

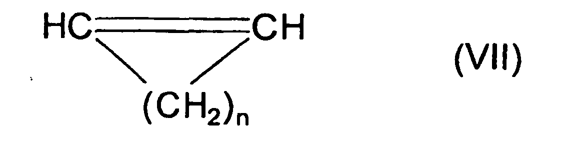

Hierin ist n eine Zahl von 2 bis 10.

Gegebenenfalls können Cycloolefinpolymere durch 0 bis 99 Gew.-%, bezogen auf die Gesamtmasse des Cycloolefinpolymeren, polymerisierte Einheiten eines acyclischen Olefins der Formel VIII enthalten:

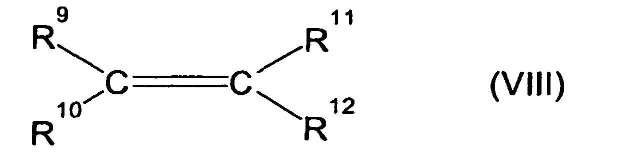

Hierin sind R⁹, R¹⁰, R¹¹, und R¹² gleich oder verschieden und bedeuten ein Wasserstoffatom oder C₁-C₁₀-Kohlenwasserstoffrest, z.B. einen C₁-C₈-Alkylrest oder C₆-C₁₄-Arylrest.

Cycloolefinhomopolymere sind aus einem Monomeren der Formeln I-VI aufgebaut. Diese Cycloolefin-Polymere sind für die Zwecke der vorliegenden Erfindung weniger geeignet.

Erfindungsgemäße Cycloolefincopolymere basieren auf Norbornen/Ethylen-Copolymeren. Besonders bevorzugt sind die Norbornen/Ethylen-Copolymeren, welche 10 bis 60 Gew.-% Ethylen enthalten (bezogen auf das Gewicht des Copolymeren).

Die vorstehend generisch beschriebenen Cycloolefinpolymeren weisen im allgemeinen Glasübergangstemperaturen zwischen -20 °C und 400 °C auf. Für die Erfindung sind Cycloolefincopolymerisate (COC) verwendbar, die eine Glasübergangstemperatur von größer als 110 °C aufweisen. Die Viskositätszahl (Dekalin, 135 °C, DIN 53 728) liegt zweckmäßiger weise zwischen 0,1 und 200 ml/g, bevorzugt zwischen 50 und 150 ml/g.

Die Herstellung der Cycloolefincopolymere (COC) geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf die in obengenannten Schriften beschriebenen Herstellungsverfahren von Cycloolefinpolymeren wird hiermit ausdrücklich Bezug genommen.

Die Cycloolefincopolymere werden entweder als reines Granulat oder als granuliertes Konzentrat (Masterbatch) in die Folie eingearbeitet, indem das Polyestergranulat oder -pulver mit dem Cycloolefincopolymer (COC) bzw. dem Cycloolefincopolymer (COC)-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren zweckmäßig, dass die Extrusionstemperatur oberhalb der Glasübergangstemperatur T_{g} des Cycloolefincopolymeren (COC) liegt, im allgemeinen mindestens 5°C, vorzugsweise 10 bis 180 °C, insbesondere 15 bis 150 °C, über der Glasübergangstemperatur des Cycloolefincopolymeren (COC).

Für die Zwischenschichten und für die Deckschichten können prinzipiell die gleichen Polymere verwendet werden, wie für die Basisschicht. Daneben können in den Deckschichten auch andere Materialien enthalten sein, wobei dann die Deckschichten bevorzugt aus einem Gemisch von Polymeren, einem Copolymeren oder einem Homopolymeren bestehen, welche Ethylen-2,6-naphthalat-Einheiten und Ethylenterephthalat-Einheiten enthalten. Bis zu 30 Mol-% der Polymere können aus weiteren Comonomeren (z.B. Ethylen-isophthalat-Einheiten) bestehen.

Die Basisschicht und die anderen Schichten können zusätzlich übliche Additive, wie Stabilisatoren, Antiblockmittel und andere Füller, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, oder Kaolin.

Als Additive können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikel können den Polymeren der einzelnen Schichten der Folie in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 25 Gew.-% erwiesen (bezogen auf das Gewicht der jeweiligen Schicht). Eine detaillierte Beschreibung der Antiblockmittel findet sich beispielsweise in der EP-A-0 602 964.

Zu Verbesserung des Weißgrades der Folie kann die Basisschicht oder die anderen zusätzlichen Schichten eine weitere Pigmentierung enthalten. Hierbei hat es sich als besonders günstig erwiesen, als zusätzliche Additive Bariumsulfat in einer Korngröße von 0,3-0,8 µm, vorzugsweise 0,4-0,7 µm oder Titandioxid in einer Komgröße von 0,05-0,3 µm, auszuwählen. Die Folie erhält hierdurch ein brilliantes, weißes Aussehen. Die Partikelkonzentration an Bariumsulfat liegt bei 1 bis 25 Gew.-%, vorzugsweise über 1 bis 20 Gew.-%, und ganz bevorzugt bei 1 bis 15 Gew.-%.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 400 µm, wobei 8 bis 300 µm, insbesondere 10 bis 300 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der Deckschicht/en wird unabhängig von den anderen Schichten gewählt und liegt bevorzugt im Bereich von 0,1 bis 10 µm, insbesondere 0,2 bis 5 µm, vorzugsweise 0,3 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die Erfindung betrifft weiterhin ein Verfahren zur Herstellung der erfindungsgemäßen Polyesterfolie nach dem an sich bekannten Extrusions- oder Koextrusionsverfahren.

Im Rahmen dieses Verfahrens wird so vorgegangen, dass die der einschichtigen Folie/die den einzelnen Schichten der Folie entsprechende Schmelze/entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell laufenden Walzen. Zum Querverstrecken benutzt man allgemein einen entsprechenden Kluppenrahmen.

Eine simultane, d.h. gleichzeitige Verstreckung der erfindungsgemäßen Folie in beiden Richtungen (MD-Richtung und TD-Richtung) mit Hilfe eines dafür geeigneten Kluppenrahmens hat sich als nicht zweckmäßig erwiesen. D.h., diese Streckung führt zu einer Folie, die einen zu kleinen Weißgrad und eine zu kleine Opazität aufweist.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Zur Einstellung weiterer gewünschter Eigenschaften kann die Folie chemisch behandelt werden als auch corona- bzw. flammbehandelt sein. Die Behandlungsintensität ist so gewählt, daß die Oberflächenspannung der Folie im allgemeinen über 45 mN/m liegt.

Ebenso kann zur Einstellung weiterer Eigenschaften die Folie beschichtet werden. Typische Beschichtungen sind haftvermittelnde, antistatisch, schlupfverbessernd oder dehäsiv wirkende Schichten. Es bietet sich an, diese zusätzlichen Schichten über in-line coating mittels wässriger Dispersionen vor der Querverstreckung auf die Folie aufzubringen.

Der besondere Vorteil der erfindungsgemäße Folie drückt sich durch einen hohen Weißgrad und durch eine hohe Opazität aus. Überraschender Weise war der Glanz der Folie ebenfalls sehr hoch. Der Weißgrad der Folie beträgt mehr als 70 %, bevorzugt mehr als 75 % und besonders bevorzugt mehr als 80 %. Die Opazität der erfindungsgemäßen Folie beträgt mehr als 55 %, bevorzugt mehr als 60 % und besonders bevorzugt mehr als 65 %. Der Glanz der erfindungsgemäßen Folie beträgt mehr als 50, bevorzugt mehr als 70 und besonders bevorzugt mehr als 90.

Ein weiterer besonderer Vorteil der Erfindung liegt darin, dass das bei der Herstellung der Folie immanent anfallende Regenerat in einer Konzentration von 10 bis 70 Gew.-%, bezogen auf das Gesamtgewicht der Folie, wieder verwendet werden kann, ohne dass dabei die physikalischen Eigenschaften der Folie nennenswert negativ beeinflußt werden. Insbesondere wird durch das Regenerat (im Wesentlichen aus Polyesterrohstoff und Cycloolefincopolymeren (COC) bestehend) die Folie nicht undefiniert in der Farbe verändert, was bei den Folien nach dem Stand der Technik der Fall ist.

Darüber hinaus besteht ein Vorteil der Erfindung darin, dass die Herstellungskosten der erfindungsgemäßen Folie vergleichbar sind mit herkömmlichen transparenten Folien nach dem Stand der Technik. Die sonstigen verarbeitungs- und gebrauchsrelevanten Eigenschaften der erfindungsgemäßen Folie bleiben im wesentlichen unverändert oder sind sogar verbessert.

Die Folie eignet sich hervorragend zur Verpackung von licht- und/oder luftempfindlichen Nahrungs- und Genußmitteln. Daneben ist sie auch hervorragend für den Einsatz im industrieellen Bereich, z.B. bei der Herstellung von Prägefolien oder als Etikettenfolie, geeignet. Daneben ist die Folie natürlich besonders geeignet für Bildaufzeichnungspapiere, Druckbögen, magnetische Aufzeichnungskarten, um nur einige mögliche Anwendungen zu nennen.

Das Verarbeitungs- und das Wickelverhalten der Folie, insbesondere auf schnelllaufenden Maschinen (Wickler, Metallisierer, Druck- und Kaschiermaschinen) ist ausgesprochen gut. Ein Maß für das Verarbeitungsverhalten ist der Reibungskoeffizient der Folie, der kleiner als 0,6 ist. Das Wickelverhalten wird neben einem guten Dickenprofil, einer hervorragender Planlage und niedrigem Reibungskoeffizienten entscheidend durch die Rauhigkeit der Folie beeinflußt. Es hat sich herausgestellt, daß die Wickelung der erfindungsgemäßen Folie insbesondere dann gut ist, wenn unter Einbehalt der anderen Eigenschaften die mittlere Rauhigkeit in einem Bereich von 50 bis 250 nm liegt. Die Rauhigkeit lässt sich u.a. durch Variation der COC-Konzentration und den Verfahrensparametern beim Herstellungsprozess im angegebenen Bereich variieren.

Die nachstehende Tabelle (Tabelle 1) faßt die wichtigsten erfindungsgemäßen Folieneigenschaften noch einmal zusammen.

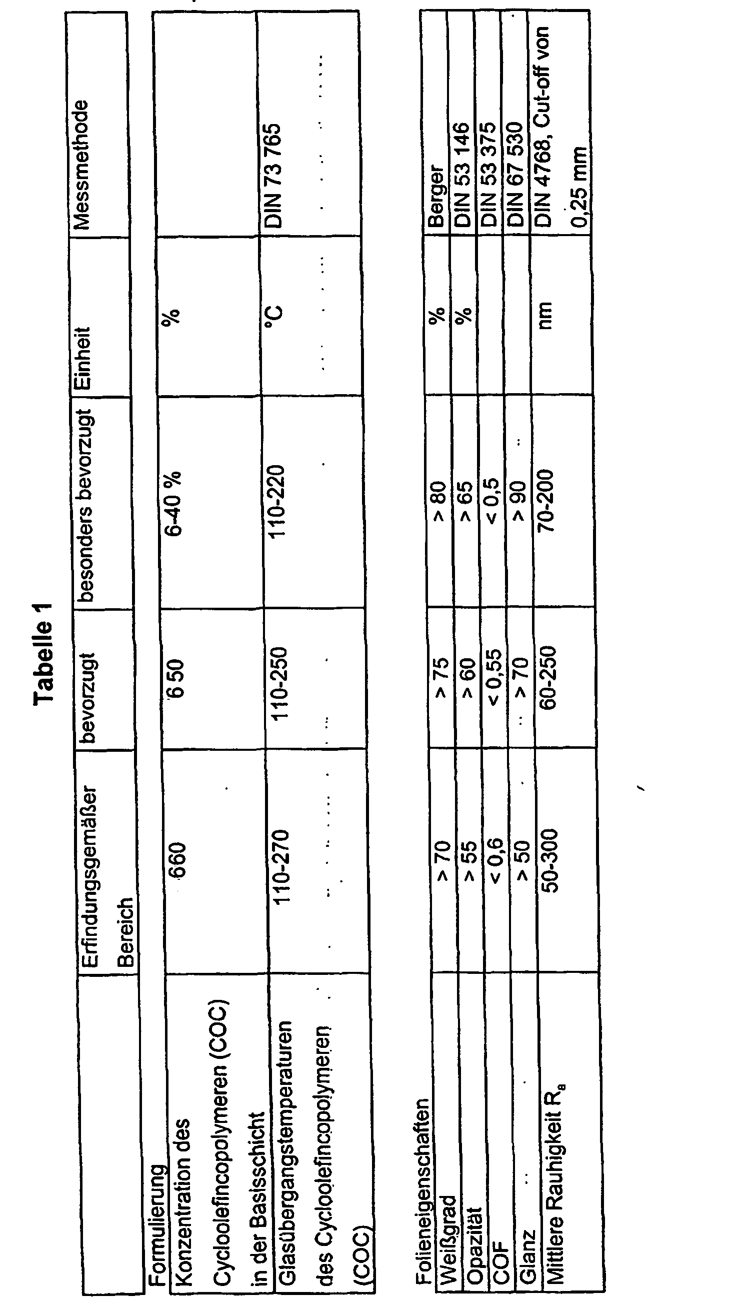

Zur Charakterisierung der Rohstoffe und der Folien wurden die folgenden Meßwerte benutzt:

### SV-Wert (solution viscosity)

Zur Bestimmung des SV-Wertes wird eine Polyester-Probe in einem Lösungsmittel (Dichloressigsäure) gelöst. Die Viskosität dieser Lösung sowie die Viskosität des reinen Lösungsmittels werden in einem Ubbelohde-Viskosimeter gemessen. Aus den beiden Werten wird der Quotient ermittelt und davon 1,000 abgezogen und dieser Wert mit 1000 multipliziert. Der resultierende Wert ist der SV-Wert ("solution viscosity").

### Reibung

Die Reibung wurde nach DIN 53 375 bestimmt. Die Gleitreibungszahl wurde 14 Tage nach der Produktion gemessen.

### Oberflächenspannung

Die Oberflächenspannung wurde mittels der sogenannten Tintenmethode (DIN 53 364) bestimmt.

### Rauhigkeit

Die Rauhigkeit Rₐ der Folie wurde nach DIN 4768 bei einem Cut-off von 0,25 mm bestimmt.

### Weißgrad und Opazität

Die Bestimmung des Weißgrades und der Opazität erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad, Rₓ, R_{y}, R_{z} = entsprechende Reflexionsfaktoren bei Einsatz des Y-, Z- und X-Farbmessfilters. Als Weißstandard wir ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

### Lichtdurchlässigkeit

Die Lichtdurchlässigkeit wird in Anlehnung an ASTM-D 1033-77 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Glasübergangstemperatur

Die Glasübergangstemperatur Tg wurde anhand von Folienproben mit Hilfe der DSC (Differential Scanning Calorimetry) bestimmt (DIN 73 765). Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang Tg ermittelt. Die Proben zeigten vielfach eine Enthalpierelaxation (ein Peak) zu Beginn des stufenförmigen Glasübergangs. Als Tg wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

### Beispiel 1

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Daneben wurden Chips aus Cycloolefincopolymeren (COC) der Fa. Ticona: ®Topas 6015 (CÖC bestehend aus 2-Norbornen und Ethylen, siehe auch W. Hatke: Folien aus COC, Kunststoffe 87 (1997) 1, S. 58-62) mit einer Glasübergangstemperatur Tg von ca. 160 °C ebenfalls dem Extruder für die Basisschicht B zugeführt. Der mengenmäßige Anteil des Cycloolefincopolymeren (COC) an der Gesamtfolie betrug 10 Gew.-%.

Es wurde durch Extrusion und anschließende stufenweise Orientierung in Längs- und Querrichtung eine weiße, opake einschichtige Folie einer Gesamtdicke von 23 µm hergestellt

Basischicht B, Mischung aus: 90,0 Gew.-% Polyethylenterephthalat-Homopolymer mit einem SV-Wert von 800 10,0 Gew.-% Cycloolefincopolymeren (COC) der Fa. Ticona, Topas 6015

Die Herstellungsbedingungen in den einzelnen Verfahrensschritten waren:

| | | |
|---|---|---|
| Extrusion | Temperaturen Basis-Schicht | 280 °C |
| | Temperatur der Abzugswalze | 30 °C |
| Längsstreckung | Temperatur | 80 - 125°C |
| | Längsstreckverhältnis | 4,2 |
| Querstreckung | Temperatur | 80 - 135 °C |
| | Querstreckverhältnis | 4,0 |
| Fixierung | Temperatur | 230 °C |
| Dauer | | 3 s |

Die Folie hatte die geforderten guten Eigenschaften und zeigt das gewünschte Handling und das gewünschte Verarbeitungsverhalten. Die erzielten Eigenschaften derart hergestellter Folien sind in der Tabelle 2 dargestellt.

### Beispiel 2

Im Vergleich zu Beispiel 1 wurde jetzt in die Basis 50 Gew.-% Regenerat dazugegeben. Die Konzentration des Cycloolefincopolymeren (COC) in der damit hergestellten Folie betrug wiederum 10 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, dass kaum eine Gelbverfärbung der Folie sichtbar geworden ist.

Basischicht B, Mischung aus:
- 45,0 Gew.-%: Polyethylenterephthalat-Homopolymer mit einem SV-Wert von 800
- 50,0 Gew.-%: Regenerat (90 Gew.-% Polyester + 10 Gew.-% Topas 6015)
- 5,0 Gew.-%: Cycloolefincopolymeren (COC) der Fa. Ticona, Topas 6015

### Beispiel 3

Im Vergleich zu Beispiel 1 wurde jetzt eine Folie mit einer Dicke von 96 µm hergestellt. Die Konzentration des Cycloolefincopolymeren (COC) in der Folie betrug 8 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, dass keine Gelbverfärbung der Folie sichtbar geworden ist.
Basischicht B, Mischung aus:
- 92,0 Gew.-%: Polyethylenterephthalat-Homopolymer mit einem SV-Wert von 800
- 8,0 Gew.-%: Cycloolefincopolymeren (COC) der Fa. Ticona, Topas 6015

### Beispiel 4

Im Vergleich zu Beispiel 3 wurde jetzt in die Basis 50 Gew.-% Regenerat dazugegeben. Die Konzentration des Cycloolefincopolymeren (COC) in der Folie betrug wiederum 8 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, dass kaum eine Gelbverfärbung der Folie sichtbar geworden ist.
Basischicht B, Mischung aus:
- 46,0 Gew.-%: Polyethylenterephthalat-Homopolymer mit einem SV-Wert von 800
- 50,0 Gew.-%: Eigenregenerat (92 Gew.-% Polyester + 8 Gew.-% Topas 6015)
- 4,0 Gew.-%: Cycloolefincopolymeren (COC) der Fa. Ticona, Topas 6015

### Vergleichsbeispiel 1

Es wurde Beispiel 1 aus der DE-A 2 353 347 nachgearbeitet. In Abänderung des Beispiels wurden zusätzlich 50 Gew.-% Regenerat mitverarbeitet. Anhand der Tabelle 2 sieht man, dass eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.
Basischicht B, Mischung aus:
- 47,5 Gew.-%: Polyethylenterephthalat-Homopolymer mit einem SV-Wert von 800
- 50,0 Gew.-%: Eigenregenerat (95 Gew.-% Polyester + 5 Gew.-% Polypropylen)
- 2,5 Gew.-%: Polypropylen

### Vergleichsbeispiel 2

Es wurde Beispiel 1 aus der EP-A 0 300 060 nachgearbeitet. In Abänderung des Beispiels wurden zusätzlich 50 Gew.-% Regenerat mitverarbeitet. Anhand der Tabelle 2 sieht man, dass eine deutliche Gelbverfärbung der Folie sichtbar geworden ist. Außerdem ist die Rauhigkeit der Folie für viele Anwendungen deutlich zu hoch und der Glanz für viele Anwendungen zu niedrig. Das ist aller Wahrscheinlichkeit auf die Verwendung anderer polymerer Additive zurückzuführen.
Basischicht B, Mischung aus:
- 45,0 Gew.-%: Polyethylenterephthalat-Homopolymer mit einem SV-Wert von 800
- 50,0 Gew.-%: Eigenregenerat (90 Gew.-% Polyester + 10 Gew.-% Polypropylen)
- 5,0 Gew.-%: Polypropylen

### Vergleichsbeispiel 3

Es wurde Beispiel 1 aus der EP-A 0 360 201 nachgearbeitet. In Abänderung des Beispiels wurden zusätzlich 50 Gew.-% Regenerat mitverarbeitet. Anhand der Tabelle 2 sieht man, dass eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.
Basischicht B, Mischung aus:
- 40,0 Gew.-%: Polyethylenterephthalat-Homopolymer mit einem SV-Wert von 800
- 50,0 Gew.-%: Eigenregenerat (80 Gew.-% Polyester + 20 Gew.-% Polypropylen)
- 10,0 Gew.-%: Polypropylen

### Vergleichsbeispiel 4

Es wurde Beispiel 1 aus der DE-A 195 40 277 nachgearbeitet. In Abänderung des Beispiels wurden zusätzlich 50 Gew.-% Regenerat mitverarbeitet. Anhand der Tabelle 2 sieht man, dass eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.
Basischicht B, Mischung aus:
- 43,5 Gew.-%: Polyethylenterephthalat-Homopolymer mit einem SV-Wert von 800
- 50,0 Gew.-%: Eigenregenerat (87 Gew.-% Polyester + 13 Gew.-% Polystyrol)
- 6,5 Gew.-%: Polystyrol

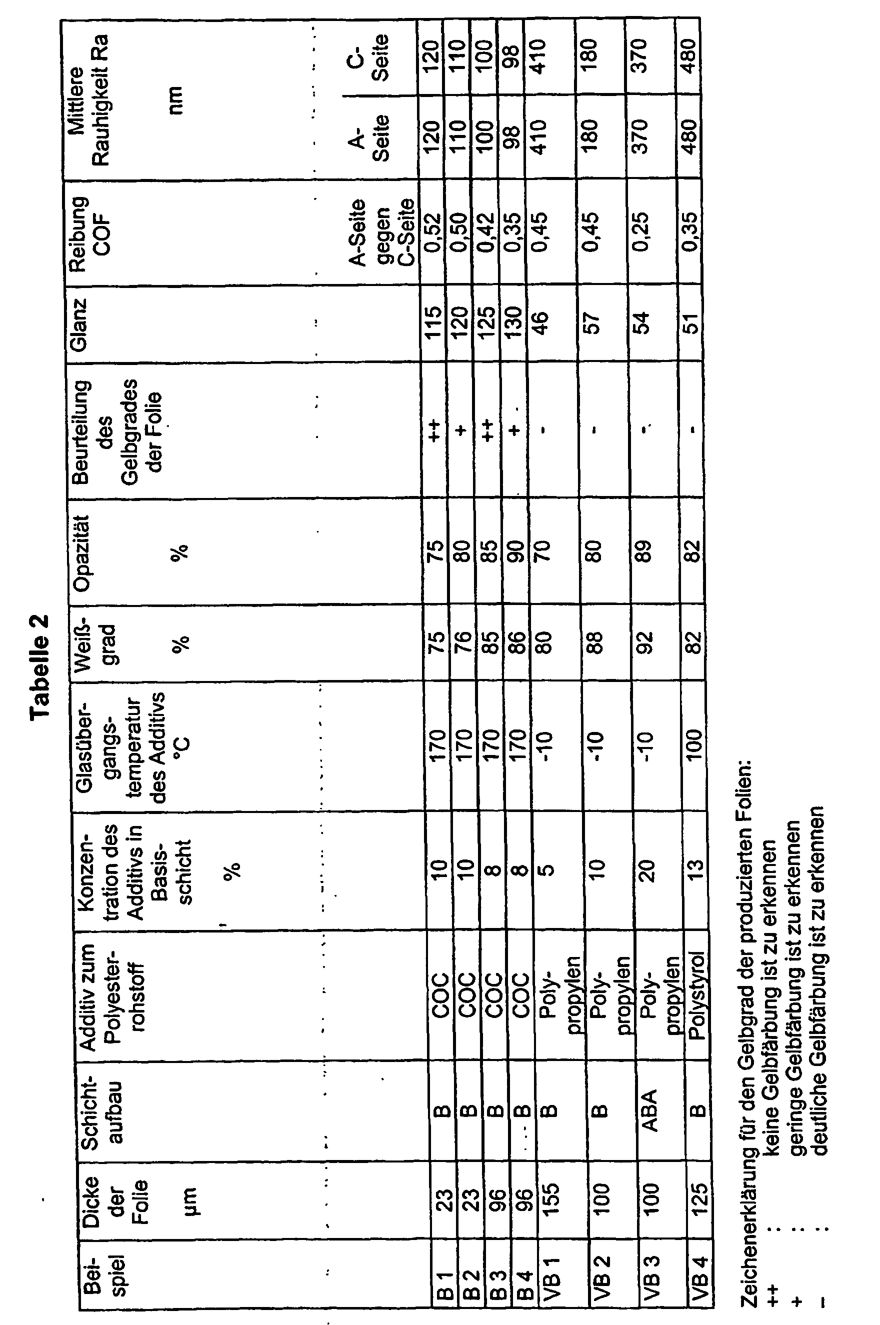

## Patentansprüche

1. Weiße, biaxial orientierte Polyesterfolie umfassend mindestens eine Schicht, **dadurch gekennzeichnet, dass** zumindest in dieser Schicht als alleiniges Opalescierungsmittel ein Cycloolefincopolymeres (COC) auf Basis eines Norbonen/Ethylen-Copolymeren in einer Konzentration von 6 bis 60 Gew.-%, bezogen auf diese Schicht, eingesetzt wird, wobei die Glasübergangstemperatur des Cycloolefincopolymeren (COC) im Bereich von 110 bis 270 °C liegt und die Folie eine Opazität von > 55 % (DIN 53 146), einen Glanz von > 90 (DIN 67 530, Einstrahlwinkel 60°) und ein Querstreckverhältnis von 3,5 : 1 bis 4,5 : 1 aufweist.

2. Polyesterfolie nach Anspruch 1, **dadurch gekennzeichnet, dass** das Cycloolefincopolymere (COC) eine Glasübergangstemperatur im Bereich von 110 bis 250 °C aufweist.

3. Polyesterfolie nach einem der Ansprüche 1 oder 2, **dadurch gekennzeichnet, dass** das Cycloolefincopolymere (COC) eine Glasübergangstemperatur im Bereich von 110 bis 220 °C aufweist.

4. Polyesterfolie nach einem oder mehreren der Ansprüche 1 bis 3, **dadurch gekennzeichnet, dass** die Folie einen Weißgrad von mehr als 70 % (definiert nach WG = RY + 3RZ - 3RX, WG = Weißgrad, Rₓ, R_{y}, R_{z} = entsprechende Reflexionsfaktoren bei Einsatz des Y-, Z- und X-Farbmessfilters; gemessen mit Hilfe des elektrischen Remissionsphotometers "ELREPHO" der Firma Zeiss, Oberkochem (DE), Normlichtart C, 2° Normalbeobachter) aufweist.

5. Polyesterfolie nach einem oder mehreren der Ansprüche 1 bis 4, **dadurch gekennzeichnet, dass** die Folie eine Opazität von mehr als 60 % aufweist.

6. Polyesterfolie nach einem oder mehreren der Ansprüche 1 bis 5, **dadurch gekennzeichnet, dass** die Schicht ein Pigment, ausgewählt aus der Gruppe Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin, enthält.

7. Polyesterfolie nach einem oder mehreren der Ansprüche 1 bis 6, **dadurch gekennzeichnet, dass** die Folie ein bei der Herstellung immanent anfallendes Regenerat in einer Menge von 10 bis 70 Gew.-% (bezogen auf die Masse der Folie) enthält.

8. Polyesterfolie nach einem oder mehreren der Ansprüche 1 bis 7, **dadurch gekennzeichnet, dass** auf der COC-haltigen Schicht eine Deckschicht angeordnet ist.

9. Polyesterfolie nach Anspruch 8, **dadurch gekennzeichnet, dass** zwischen der COC-haltigen Schicht und der Deckschicht eine Zwischenschicht angeordnet ist.

10. Polyesterfolie nach einem oder mehreren der Ansprüche 1 bis 7, **dadurch gekennzeichnet, dass** die Folie einschichtig ist und aus der COC-haltigen Schicht besteht.

11. Verwendung der Polyesterfolie nach den Ansprüchen 1 bis 10 zur Verpackung und für den Einsatz im industrieellen Bereich.

12. Verwendung nach den Anspruch 11 für licht- und/oder luftempfindliche Nahrungs- und Genußmittel und für die Herstellung von Prägefolien, Etikettenfolie, für Bildaufzeichnungspapiere, Druckbögen und magnetische Aufzeichnungskarten.

## Claims

1. A white, biaxially oriented polyester film encompassing at least one layer, wherein at least this layer uses, as sole opalizer, a cycloolefin copolymer (COC) based on a norbornene-ethylene copolymer at a concentration of from 6 to 60 % by weight, based on this layer, where the glass transition temperature of the cycloolefin copolymer (COC) is in the range from 110 to 270 °C, and the opacity of the film is > 55 % (DIN 53 146), its gloss is > 90 (DIN 67 530, angle of incidence 60 °), and its transverse stretching ratio is from 3.5:1 to 4.5:1.

2. The polyester film as claimed in claim 1, wherein the glass transition temperature of the cycloolefin copolymer (COC) is in the range from 110 to 250 °C.

3. The polyester film as claimed in claim 1 or 2, wherein the glass transition temperature of the cycloolefin copolymer (COC) is in the range from 110 to 220 °C.

4. The polyester film as claimed in one or more of claims 1 to 3, wherein the whiteness of the film is more than 70 % (defined by W = RY + 3RZ - 3RX, W = whiteness, Rₓ, R_{y}, R_{z} = corresponding reflectance factors when using the Y, Z, and X color measurement filter; measured with the aid of the "ELREPHO" electrical reflectance photometer from Zeiss, Oberkochem (DE), standard illuminant C, 2 ° standard observer).

5. The polyester film as claimed in one or more of claims 1 to 4, whose opacity is more than 60 %.

6. The polyester film as claimed in one or more of claims 1 to 5, wherein the layer comprises a pigment selected from the group of calcium carbonate, amorphous silica, talc, magnesium carbonate, barium carbonate, calcium sulfate, barium sulfate, lithium phosphate, calcium phosphate, magnesium phosphate, aluminum oxide, lithium fluoride, the calcium, barium, zinc, or manganese salts of the dicarboxylic acids used, carbon black, titanium dioxide, kaolin.

7. The polyester film as claimed in one or more of claims 1 to 6, which comprises an amount of from 10 to 70 % by weight (based on the weight of the film) of a regrind arising directly during the production process.

8. The polyester film as claimed in one or more of claims 1 to 7, wherein an outer layer has been arranged on the COC-containing layer.

9. The polyester film as claimed in claim 8, wherein an intermediate layer has been arranged between the COC-containing layer and the outer layer.

10. The polyester film as claimed in one or more of claims 1 to 7, which is a single-layer film composed of the COC-containing layer.

11. The use of the polyester film as claimed in any of claims 1 to 10 for packaging and in the industrial sector.

12. The use as claimed in claim 11 for foods and other consumable items which are sensitive to light and/or to air, and for the production of stamping foils, label film, for image-recording papers, print feedstock and magnetic recording cards.

## Revendications

1. Film polyester blanc orienté biaxialement comprenant au moins une couche, **caractérisé en ce qu'**au moins dans cette couche est utilisé en tant que seul agent d'opalescence un copolymère de cyclo-oléfine (COC) à base d'un copolymère norbornène/éthylène à une concentration de 6 à 60 % en poids, par rapport à cette couche, la température de transition vitreuse du copolymère de cyclo-oléfine (COC) étant dans la plage de 110 à 270°C et le film ayant une opacité de >55 % (DIN 53 146), un brillant de >90 (DIN 67 530, angle d'incidence 60°) et un rapport d'étirage transversal de 3,5:1 à 4,5:1.

2. Film polyester selon la revendication 1, **caractérisé en ce que** le copolymère de cyclo-oléfine (COC) présente une température de transition vitreuse dans la plage de 110 à 250°C.

3. Film polyester selon la revendication 1 ou 2, **caractérisé en ce que** le copolymère de cyclo-oléfine (COC) présente une température de transition vitreuse dans la plage de 110 à 220°C.

4. Film polyester selon une ou plusieurs des revendications 1 à 3, **caractérisé en ce que** le film présente un degré de blancheur de plus de 70 % (défini selon WG = RY + 3RZ - 3RX, WG = degré de blancheur, Rₓ, R_{y}, R_{z} = facteurs de réflexion correspondants avec utilisation du filtre colorimétrique Y, Z et X, mesuré à l'aide du photomètre à rémission électrique "ELREPHO" de la société Zeiss, Oberkochem (DE), type de lumière normalisée C, observateur à 2° de la normale.

5. Film polyester selon une ou plusieurs des revendications 1 à 4, **caractérisé en ce que** le film présente une opacité de plus de 60 %.

6. Film polyester selon une ou plusieurs des revendications 1 à 5, **caractérisé en ce que** la couche contient un pigment choisi parmi le carbonate de calcium, l'acide silicique amorphe, le talc, le carbonate de magnésium, le carbonate de baryum, le sulfate de calcium, le sulfate de baryum, le phosphate de lithium, le phosphate de calcium, le phosphate de magnésium, l'oxyde d'aluminium, le fluorure de lithium, les sels de calcium, baryum, zinc ou manganèse des acides dicarboxyliques utilisés, le noir de carbone, le dioxyde de titane, le kaolin.

7. Film polyester selon une ou plusieurs des revendications 1 à 6, **caractérisé en ce que** le film contient en une proportion de 10 à 70 % en poids (par rapport à la masse du film) une matière de régénération produite de façon immanente lors de la fabrication.

8. Film polyester selon une ou plusieurs des revendications 1 à 7, **caractérisé en ce qu'**une couche de recouvrement est disposée sur la couche contenant du C-O-C.

9. Film polyester selon la revendication 8, **caractérisé en ce qu'**une couche intermédiaire est disposée entre la couche contenant du C-O-C et la couche de recouvrement.

10. Film polyester selon une ou plusieurs des revendications 1 à 7, **caractérisé en ce que** le film est monocouche et est constitué de la couche contenant du C-O-C.

11. Utilisation du film polyester selon les revendications 1 à 10, pour l'emballage et pour l'emploi dans le secteur industriel.

12. Utilisation selon la revendication 11, pour des produits alimentaires et autres produits de consommation photosensibles et/ou sensibles à l'air et pour la fabrication de films gaufrés, de films pour étiquettes, pour des papiers d'enregistrement d'images, des feuilles d'impression et des cartes d'enregistrement magnétique.
